# EUROPEAN PATENT APPLICATION

(11) **EP 4 571 913 A1**
(43) Date of publication of application: **18.06.2025**
(21) Application number: 24214118.2
(22) Date of filing: 20.11.2024
(51) Int. Cl.: H01M 10/052, H01M 50/403, H01M 50/446, H01M 50/449, H01M 50/489

(54) **SEPARATOR AND SECONDARY BATTERY COMPRISING THE SAME, AND METHOD FOR PRODUCING THE SAME**

(30) Priority: 22.11.2023 KR 20230163167
(71) Applicant: SK Innovation Co., Ltd., Seoul 03188 (KR); SK ie technology Co., Ltd., Jongno-gu Seoul 03188 (KR)
(72) Inventor: JI, Sang Yoon, 34124 Daejeon (KR); KWACK, Won Sub, 34124 Daejeon (KR); JANG, Dong Il, 34124 Daejeon (KR); LEE, Soon Bo, 34124 Daejeon (KR)
(74) Representative: Prüfer & Partner mbB Patentanwälte · Rechtsanwälte

(57) **Abstract**

Embodiment of the present disclosure is to a separator for an electrochemical device comprising a porous substrate, and an inorganic particle layer comprising inorganic particles on or above at least one surface of the porous substrate, wherein the inorganic particle layer has a surface roughness (Ra) of 100 nm to 160 nm. The separator according to an example embodiment may improve heat resistance, charge/discharge characteristics, and life characteristics of a battery, by having the above surface roughness.

## Description

### TECHNICAL FIELD

The following disclosure relates to a separator and a **secondary** battery comprising the same.

### BACKGROUND

A separator of a battery in an electrochemical device is very important for improving stability, lifespan, and performance of the battery. The main function of the separator is to provide an ion migration path in a battery and prevent a physical contact between a negative electrode and a positive electrode, and a battery having excellent performance may be manufactured by improving the characteristics of the separator.

In order to improve the characteristics of the separator used in the battery, a multilayer separator is formed by laminating a porous polymer such as polyolefin-based or polypropylene-based polymers, or a separator having a coating layer formed by mixing a binder and inorganic particles on a porous polymer used as a substrate. The multilayer separator or the coating layer in which a binder and optional other components are mixed may improve various characteristics of a separator as compared with a single-layer separator, but the thickness of the separator may be increased, and the performance of a battery may be rather degraded due to low permeability, decreased wettability, and reduced impregnation. In order to solve the problems as such, research is in progress for manufacturing a separator which has various characteristics sufficiently appropriate for the separator of a battery, and which is thin and satisfies mechanical and chemical stability to improve battery performance.

### SUMMARY

An embodiment of the present disclosure is directed to providing a separator for an electrochemical device, such as a secondary battery, having excellent heat resistance and excellent charge and discharge characteristics and life characteristics.

Another embodiment of the present disclosure is directed to providing a secondary battery comprising the separator.

In one general aspect, a separator for an electrochemical device, such as a secondary battery, comprises: a porous substrate, and an inorganic particle layer comprising inorganic particles on or above, preferably on, at least one, preferably on two, surface(s) of the porous substrate, wherein the inorganic particle layer has a surface roughness (Ra) of 100 nm to 160 nm.

In another general aspect, a secondary battery comprises the separator according to the aforementioned general aspect and according to embodiments thereof further exemplified below.

In another general aspect, the present disclosure provides a method for producing a separator and specifically for the manufacture of an electrochemical device, such as a secondary battery.

Other features and aspects will be apparent from the following detailed description and the claims.

### BRIEF DESCRIPTION OF THE DRAWINGS

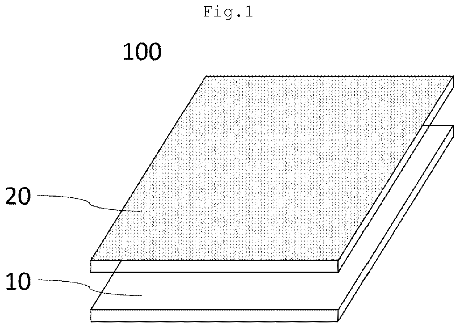

FIG.1 is a schematic structure of a separator according to one embodiment. 100: Separator; 10: Porous substrate; 20: Inorganic particle layer.

### DETAILED DESCRIPTION OF EMBODIMENTS

Since the embodiments described in the present specification may be modified in many different forms, the technology according to an example embodiment is not limited to the embodiments set forth herein. Furthermore, throughout the specification, unless otherwise particularly stated, the word "comprising", "comprising", "containing", "being provided with", or "having" does not mean the exclusion of any other constituent element, but rather means further inclusion of other constituent elements, and elements, materials, or processes which are not further listed are not excluded.

The numerical range used in the present specification comprises all values within the range comprising the lower limit and the upper limit, increments logically derived in a form and spanning in a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also comprised in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Hereinafter, unless otherwise particularly defined in the present specification, "(meth)acryl" refers to acryl and/or methacryl.

Unless otherwise defined in the present specification, an average particle diameter of inorganic particles refers to a D₅₀ value. From the average particle diameter D₅₀ results a specific particle size distribution. The above particle diameter (D₅₀) was measured in accordance with the ISO standard(ISO13320-1) using a particle size analyzer (Microtrac, Microtrac S3500) .

Unless otherwise defined in the present specification, when it is said that a part such as a layer, a film, a thin film, a region, or a plate is "on" or "above" the other part, the part may be "directly on" the other part, and also, another part may intervene therebetween.

Unless otherwise defined in the present specification, a "polymer" refers to a molecule having a relatively high molecular weight, and its structure may comprise multiple repetition of a unit derived from a low molecular weight molecule. In an embodiment, the polymer may be an alternating copolymer, a block copolymer, a random copolymer, a graft copolymer, a gradient copolymer, a branched copolymer, a crosslinked copolymer, or a copolymer comprising all of them (for example, a polymer comprising more than one monomer). In another embodiment, the polymer may be a homopolymer (for example, a polymer comprising one monomer).

An example embodiment provides a separator which has high heat resistance and may suppress performance degradation of a battery during charging and discharging. Specifically, the separator(100) according to an example embodiment comprises: a porous substrate(10), and an inorganic particle layer(20) comprising inorganic particles on or above, preferably on, at least one surface of the porous substrate, wherein the inorganic particle layer has a surface roughness (Ra) of 100 nm to 160 nm. The present disclosure has been devised by first recognizing that the inorganic particle layer comprised in the separator as disclosed herein and according to embodiments thereof further exemplified below allows uniform migration of a lithium ion during battery charging and discharging, and also, may effectively suppress a problem of a side reaction due to moisture, by satisfying the surface roughness (Ra) of 100 nm to 160 nm.

The effect is an effect caused by adjusting the surface roughness (Ra) of the inorganic particle layer to 100 nm to 160 nm, and is not an effect influenced only by any specific element of the constituent elements of the separator or during the manufacturing process of the separator. As confirmed in an example embodiment, since it may be implemented by various means comprising various factors such as an average particle diameter of an inorganic material, a slurry solid content, and a coating rate, there is no limitation on how the surface roughness (Ra) of the inorganic particle layer is implemented.

Therefore, whatever the average particle diameter, distribution, or combination of an inorganic material is, whatever the manufacturing conditions of the separator are, that is, whatever the content and type of a binder, a dispersant, and a lubricant, the slurry solid content, and the rotation speed and/or bead size in a slurry preparation step are, whether a smoothing bar is used, whatever the drying temperature is, whatever the porous substrate is, and whatever the electrolyte of a battery is, when the surface roughness (Ra) of the inorganic particle layer of an example embodiment is satisfied, heat resistance of the separator is excellent, and the life characteristics and the charge/discharge characteristics of a battery manufactured using the separator are excellent. Nonetheless, the parameters and/or preparation conditions listed above may additionally contribute to arriving at the improved separator.

In an example embodiment, the separator may have the surface roughness (Ra) of 100 nm to 160 nm, 110 nm to 150 nm, 120 nm to 140 nm, 125 nm to 140 nm, or about 130 nm on average. In an example embodiment, the surface roughness (Ra) value of the separator may be a surface roughness value of a fresh separator before cycle operation. In a preferred embodiment, the surface roughness (Ra) value of the separator is a surface roughness value of a fresh separator before cycle operation. The surface roughness (Ra) represents the average of the absolute distances of the roughness profile from the mean line along a surface length. Ra may measure the variations in the height of the surface's microscopic peaks and valleys; it is an average of the absolute values of the vertical deviations from the mean line across that surface. Surface roughness (Ra) may be measured using Atomic Force Microscopy.

In an example embodiment, the type of inorganic particles comprised in the inorganic particle layer is not particularly limited as long as the inorganic particles are known to be electrochemically stable. For example, any one or more of boehmite, CeO₂, MgO, CaO, ZnO, Al₂O₃, TiO₂, BaTiO₃, HfO₂, SrTiO₃, SnO₂, NiO, ZrO₂, Y₂O₃, and/or SiC may be comprised. In a preferred embodiment, the inorganic particle comprised in the inorganic particle layer is boehmite.

In an example embodiment, an average particle diameter (D₅₀) of the inorganic particles may be appropriately selected depending on the experiment conditions and the purpose as long as the surface roughness range of the separator according to an example embodiment is satisfied, and is not necessarily limited to a certain range. For example, the inorganic particles may have an average particle diameter of 0.01 um to 10.0 um, 0.01 um to 5.0 um, 0.1 um to 3.0 um, 0.05 um to 2.0 um, 0.1 µm to 1.8 µm, 0.1 µm to 1.6 µm, or 0.1 um to 1.0 um. The above particle diameter (D₅₀) was measured in accordance with the ISO standard(ISO13320-1) using a particle size analyzer (Microtrac, Microtrac S3500) .

Otherwise, the inorganic particles may be a mixture of 1, 2, 3, or more types of inorganic particles having different average particle diameters from each other. Such a mixture may be observed to show mono-, di-, tri- or further multi-modal particle size distribution. Such mono-, di-, tri- or multi-modal particle size distribution may preferably be observed in the mixture of inorganic particles before being added to a coating slurry, i.e. when using such two or more types of inorganic particles in terms of size. For example, any one or more of first inorganic particles having an average particle diameter of 0.1 µm to 0.6 um, 0.1 um to 0.5 um, or about 0.3 µm; second inorganic particles having an average particle diameter of 0.3 µm to 1.0 um, 0.5 um to 1.0 um, or about 0.7 µm; and/or third inorganic particles having an average particle diameter of 1.0 um to 3.0 µm, 1.0 um to 2.0 µm, or about 1.6 um may be mixed and used. For example, the inorganic particles may comprise the first (or first type) inorganic particles and the second (or second type) inorganic particles, or the first inorganic particles and the third (or third type) inorganic particles. Herein, the first inorganic particles, the second inorganic particles, and the third inorganic particles may be the inorganic particles identical to or different from each other, only differing regarding their particle size distribution being a di-, tri- or further multi-modal particle size distribution.

In an example embodiment, when inorganic particles having two average particle diameters different from each other are used (i.e. using two types of inorganic particles in terms of size), though the weight ratio is not particularly limited, they may be, for example, mixed at 20:80 to 80:20, 30:70 to 70:30, 50:50 to 80:20, 70:30, or 50:50. For example, the inorganic particles may comprise the first inorganic particles and the second inorganic particles at a weight ratio of 30:70 to 80:20, 50:50 to 80:20, 60:40 to 80:20, or about 70:30. Otherwise, the inorganic particles may comprise the first inorganic particles and the third inorganic particles at a weight ratio of 30:70 to 70:30, 40:60 to 60:40, or about 50:50. However, these show only examples, and the inorganic particles are not necessarily mixed at the weight ratio. Herein, the first inorganic particles, the second inorganic particles, and the third inorganic particles (or optionally further inorganic particles) may be the inorganic particles identical to or different from each other.

In a preferred embodiment, a mixture of two types of inorganic particles, wherein preferably the inorganic particles are boehmites which only differ regarding their particle size distribution being a bi-modal particle size distribution, is used. It is additionally preferred that the first type of inorganic particles has an average particle diameter D50 being relatively low, e.g. below 1.0 µm. or about 0.3 µm, and the second type of inorganic particles has an average particle diameter D50 being relatively higher than the first type, e.g below or above 1.0 um but higher than the first type, e.g. about 0.7 µm or about 1.6 µm.

In an example embodiment, the inorganic particle layer may further comprise a binder. The binder may be appropriately selected by an ordinary person skilled in the art disclosed in the present application according to the purpose and situation from known binders. In an example embodiment, the binder may comprise a polymer, and, for example, may comprise any one or more selected from the group consisting of ester-based polymers, amide-based polymers, imide-based polymers, acryl-based polymers, acrylamide-based polymers, vinylalcohol-based polymers, fluorine-based polymers, and/or vinylpyrrolidone-based polymers. In an example embodiment, the binder may comprise an acrylamide-based polymer. Otherwise, for example, the binder may comprise a polymer prepared from any one or more monomers of (meth)acrylamide-based monomers, hydroxyl group-containing (meth)acryl-based monomers, and/or polyfunctional (meth)acrylamide-based monomers, and is not limited as long as the binder is used as a binder of the inorganic particle layer in which the inorganic particles formed on the surface of the porous substrate of the separator for a secondary battery are connected to each other by the binder to form pores.

In an example embodiment, the content of the binder may be appropriately adjusted to suit the situation and purpose within the inorganic particle layer surface roughness (Ra) range satisfying 100 nm to 160 nm. For example, the content of the binder may be 0.1 parts by weight to 20.0 parts by weight, 0.1 parts by weight to 15.0 parts by weight, 1.0 part by weight to 10.0 parts by weight, 1.0 part by weight to 5.0 parts by weight, or about 3.0 parts by weight, with respect to 100 parts by weight of the inorganic particles.

In an example embodiment, the binder (or a polymer comprised in the binder) may have a weight average molecular weight (Mw) of 10,000 g/mol to 2,000,000 g/mol, 50,000 g/mol to 2,000,000 g/mol, 50,000 g/mol to 1,000,000 g/mol, 50,000 g/mol to 500,000 g/mol, 50,000 g/mol to 300,000 g/mol, 100,000 g/mol to 300,000 g/mol, or about 150,000 g/mol, but is only an example, and the weight average molecular weight may be appropriately selected according to the experimental conditions as long as the surface roughness range of the separator is satisfied. The weight average molecular weight may be measured by gel permeation chromatography (GPC). Specifically, measurement of weight average molecular weight may be performed by using GPC (EcoSEC HLC-8320 GPC Refractive Index detector available from Tosoh Corporation) using TSKgel guard PWx, two columns of TSKgel GMPWxl and TSKgel G2500PWxl (7.8×300 mm) as a GPC column, a 0.1 M NaNO₃ aqueous solution as a developing solvent, and polyethylene glycol as a standard, and performing analysis at 40°C at a flow rate of 1 mL/min.

In an example embodiment, the porous substrate is not limited as long as it is commonly used in the art, and for example, may be a woven fabric, a non-woven fabric, or a porous film. Specifically, the porous substrate may be polyolefins such as polyethylene and polypropylene, polyesters such as polyethylene terephthalate, polybutylene terephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, teflon, and/or polytetrafluoroethylene, and any two or more of them may be used.

In an example embodiment, the thickness of the porous substrate is not particularly limited, and for example, may be 1 um to 100 um, 1 um to 50 um, 1 um to 30 um, 5 um to 20 µm, or about 9 um.

In an example embodiment, the inorganic particle layer formed on any one surface of the porous substrate may have a thickness of, for example, 0.1 µm to 10.0 µm, 0.1 µm to 5.0 µm, 0.5 um to 3.0 µm, 1.0 µm to 2.0 µm, or about 1.5 µm. In the case in which the inorganic particle layer is formed on both surfaces of the porous substrate, the thickness may be 0.2 um to 15.0 um, 0.3 um to 10.0 um, 1.0 um to 8.0 um, 2.0 um to 5.0 um, or about 3.0 um.

In an example embodiment, the inorganic particle layer may have a coating density of 0.8 g/(m²·µm) or more, and the upper limit may be 3.0 g/(m²·µm). Specifically, the coating density may be 1.0 g/(m²·µm) to 3.0 g/(m²·µm) , 1.0 g/(m²·µm) to 2.0 g/(m²·µm), 1.0 g/(m²·µm) to 1.5 g/(m²·µm), 1.1 g/(m²·µm) to 1.4 g/(m²·µm) , or 1.1 g/(m²·µm) to 1.3 g/(m²·µm). The coating density is defined as a value obtained by dividing the weight (g) per unit area (m²) of the inorganic particle layer by the thickness (µm) of the inorganic particle layer.

In an example embodiment, the separator may have both shrinkage rates in the machine direction (MD) and the transverse direction (TD) of 5.0% or less, after being allowed to stand at 150°C for 60 minutes, and the lower limit may be 0.5%. Specifically, the shrinkage rate may be 0.5% to 5.0%, 1.0% to 4.0%, or 1.0% to 3.0%.

In an example embodiment, the separator may have an air permeability (Gurley permeability) in accordance with ASTM D726 of 150 s/100 cc to 190 s/100 cc, 160 s/100 cc to 175 s/100 cc, or 160 s/100 cc to 170 s/100 cc.

In an example embodiment, the separator may have a moisture content of 300 ppm to 1000 ppm, 550 ppm to 800 ppm, 550 ppm to 700 ppm, or 580 ppm to 680 ppm, the moisture content being measured while heating to 150°C after being dried in a dry room having a dew point of -40°C or lower at 80°C for 12 hours and allowed to stand in the dry room for 30 minutes. In an example embodiment, the moisture content was measured by the following method. For measuring the moisture content, first, the separator was dried. The drying was performed in a dry room having a dew point of -40°C, and the separator was dried in a convection oven at 80°C for 12 hours. Thereafter, the separator was taken out of the oven and stored in the dry room for 30 minutes. Next, 0.3 g of the dried separator was collected and a moisture amount occurring by heating a specimen to 150°C was measured in accordance with a Karl Fischer moisture measurement method using a moisture meter (Metrohm, 917 Coulometer).

The separator having the surface roughness (Ra) of 100 nm to 160 nm according to an example embodiment has a low heat shrinkage rate, compactness and air permeability of an inorganic material in the most appropriate level for separator performance and battery performance, and a low moisture content. Thus, charge/discharge performance and life characteristics of a battery are excellently implemented. Meanwhile, when the surface roughness (Ra) of the separator is higher than 160 nm, the inorganic material is not packed well, so that air permeability, moisture content, and initial resistance are low, but lithium ions do not uniformly migrate during battery charging and discharging to cause performance degradation. In addition, when the surface roughness (Ra) of the separator is lower than 100 nm, the inorganic material is packed too densely, so that air permeability, moisture content, and initial resistance are high, resulting in performance degradation due to a side reaction by moisture during battery charging and discharging.

The separator according to an example embodiment may have a change rate in surface roughness (Ra) of 30% or less, 20% or less, or 15% or less, and 1% to 20%, 5% to 20%, 5% to 15%, 10% to 15%, or 10% to 13%, when a secondary battery manufactured using the separator is charged and discharged for 600 cycles. Herein, the change rate is an absolute value, and the absolute value is calculated by {|(surface roughness (Ra) after 600 cycles)-(initial surface roughness (Ra)) |}/(initial surface roughness (Ra)). When the separator according to an example embodiment satisfies a change value of 30% or less after charging and discharging for 600 cycles while also satisfying the surface roughness (Ra) value of 100 nm to 160 nm, better battery performance may be implemented.

The separator having the surface roughness (Ra) of 100 nm to 160 nm according to an example embodiment may be manufactured by preparing a composition for forming an inorganic particle layer comprising inorganic particles; and applying (or coating) the composition for forming an inorganic particle layer on at least one surface of the porous substrate and then drying to form the inorganic particle layer.

In an example embodiment, a solvent used in the composition for forming an inorganic particle layer is not particularly limited, and when the composition comprises the binder, a solvent which is easy to dissolve or disperse the binder may be selected. For example, water, acetone, ethanol, tetrahydrofuran, methylene chloride, chloroform, cyclohexane, dimethylformamide, and/or N-methyl-2-pyrrolidone may be used.

In an example embodiment, the composition for forming an inorganic particle layer may be a slurry, and a solid content of the slurry may be, for example, 15 wt% to 40 wt%, 20 wt% to 40 wt%, or 20 wt% to 35 wt%.

In an example embodiment, a method for applying or coating the composition for forming an inorganic particle layer on the porous substrate is not particularly limited, but for example, roll coating, spin coating, dip coating, bar coating, die coating, slit coating, or inkjet printing may be used.

In an example embodiment, the drying may be performed by drying by warm air, hot air, or low-humidity air, vacuum drying, irradiation with far infrared rays or electron beams, and optionally other drying techniques. Since a drying temperature is not particularly limited, it may be appropriately adjusted depending on the experimental environment or the purpose, and for example, may be 30°C to 120°C, 30°C to 100°C, 30°C to 50°C, or about 45°C.

As described above, the surface roughness (Ra) of the separator of an example embodiment may be implemented by various means, and may be adjusted by the size of the inorganic particles, the distribution degree of the inorganic particles, the type and content of the binder, the solid content of the slurry, the preparation conditions of the slurry, the viscosity of the slurry, the drying conditions (temperature, speed), a coating speed, flattening means using a smoothing bar, and optionally further influencing factors.

Another example embodiment provides a secondary battery comprising the separator according to an example embodiment.

In an example embodiment, the secondary battery may have a capacity change rate after 100 cycles of charge and discharge of 20% or less, 10% or less, 9% or less, 8% or less, or 7% or less, and 2% to 10%, 3% to 8%, or 4% to 5%. Herein, the change rate is an absolute value, and the absolute value is calculated by {|(capacity after 100 cycles)-(initial capacity) |}/(initial capacity).
Another example embodiment provides A method for producing a separator, comprising the steps of:
providing a porous substrate,
applying a slurry comprising inorganic particles to one or both of the surface (s) of the porous substrate in order to provide inorganic particle layer(s) on one or both sides of the porous substrate, respectively;
wherein the obtained inorganic particle layer has a surface roughness (Ra) of 100 nm to 160 nm,
optionally wherein said surface roughness (Ra) is relatively maintained by change rate of the surface roughness (Ra) being 30% or less, when a secondary battery manufactured using the separator is charged and discharged for 600 cycles.

In an example embodiment, The method for producing a separator according to claim 12 for manufacturing a secondary battery, wherein the manufacturing conditions for obtaining the inorganic particle layer with the specified surface roughness (Ra) are selected from one or more of the following conditions, respectively alone or in combination:
content and type of a binder;
use or type of a dispersant and/or of a lubricant used for the slurry;
solid content of the slurry;
the rotation speed and/or bead size in a slurry preparation step;
coating rate when applying the slurry on the porous substrate;
use or absence of a smoothing bar;
use or absence of a drying under heating and which drying temperature is used;
type of the porous substrate;
type of the electrolyte of a battery is; and/or
type of inorganic materials comprised in the inorganic particle layer, selected from average particle diameter and/or distribution of particle size, and/or weight ratio of different types of inorganic particles;
preferably wherein the manufacturing conditions include selecting the type of inorganic particles comprised in the inorganic particle layer, wherein the average particle diameter (D₅₀) falls within a predetermined range, or wherein the inorganic particles comprise a mixture of one or more types of inorganic particles which differ by having average particle diameters (D₅₀) different from each other.

Hereinafter, the constituent elements of the secondary battery according to the present disclosure will be further described.

### [Positive electrode]

A positive electrode may comprise a positive electrode current collector and a positive electrode mixture layer disposed on at least one surface of the positive electrode current collector.

### (Positive electrode current collector)

The positive electrode current collector may comprise stainless steel, nickel, aluminum, titanium, or an alloy thereof. The positive electrode current collector may comprise carbon, nickel, titanium, or aluminum which is surface treated with silver, or stainless steel. Though the positive electrode current collector is not limited thereto, it may be, for example, 10 um to 50 µm.

### (Positive electrode material)

A positive electrode mixture layer may comprise a positive electrode active material. The positive electrode active material may comprise a compound which may reversibly intercalate and deintercalate lithium ions.

According to example embodiments, the positive electrode active material may be used without limitation as long as it is a conventionally used positive electrode active material, and for example, the positive electrode active material may comprise a lithium-nickel metal oxide. The lithium-nickel metal oxide may further comprise at least one of cobalt (Co), manganese (Mn), and aluminum (Al).

The positive electrode active material may further comprise a coating element or a doping element. For example, the auxiliary elements described above and elements substantially identical or similar thereto may be used as a coating element or a doping element. For example, among the elements described above, a single or a combination of two or more is used as a coating element or a doping element.

The positive electrode active material may comprise a nickel-cobalt-manganese (NCM)-based lithium oxide. In this case, an NCM-based lithium oxide having an increased nickel content may be used.

The content of Ni in the NCM-based lithium oxide (for example, the mole fraction of nickel of the total moles of nickel, cobalt, and manganese) may be 0.6 or more, 0.7 or more, or 0.8 or more. In some example embodiment, the content of Ni may be 0.8 to 0.95, 0.82 to 0.95, 0.83 to 0.95, 0.84 to 0.95, 0.85 to 0.95, or 0.88 to 0.95.

In some example embodiments, the positive electrode active material may comprise a lithium cobalt oxide-based active material, a lithium manganese oxide-based active material, a lithium nickel oxide-based active material, or a lithium iron phosphate (LFP)-based active material (for example, LiFePO₄).

### (Method for manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, but is not limited thereto. The positive electrode mixture layer may further comprise a binder, and may optionally further comprise a conductive material, a thickener, and possibly further components.

### (Positive electrode solvent)

A non-limiting example of the solvent used in the preparation of the positive electrode mixture may comprise N-methyl-2-pyrrolidone (NMP), dimethyl formamide, dimethyl acetamide, N,N-dimethylaminopropylamine, ethylene oxide, tetrahydrofuran, and optional similar or related solvents.

### (Positive electrode binder)

The binder may comprise polyvinylidene fluoride (PVDF), poly(vinylidene fluoride-co-hexafluoropropylene, polyacrylonitrile, polymethyl methacrylate, acrylonitrile butadiene rubber (NBR), polybutadiene rubber (BR), styrene-butadiene rubber (SBR), and optionally similar or related polymer binders. In an example embodiment, a PVDF-based binder may be used as a positive electrode binder.

### (Positive electrode conductive material)

The conductive material may be added for increasing conductivity of the positive electrode mixture layer and/or mobility of lithium ions or electrons. For example, the conductive material may comprise carbon-based conductive materials such as graphite, carbon black, acetylene black, ketjen black, graphene, carbon nanotubes, vapor-grown carbon fiber (VGCF), and carbon fiber, and/or metal-based conductive materials comprising tin oxide, titanium oxide, perovskite materials such as LaSrCoO₃ and LaSrMnO₃, and optionally similar or related positive electrode conductive materials, but is not limited thereto.

### (Positive electrode thickener/ dispersant)

If necessary, the positive electrode mixture may further comprise a thickener and/or a dispersant and optionally further components. In an example embodiment, the positive electrode mixture may comprise a thickener such as carboxymethyl cellulose (CMC).

### [Negative electrode]

The negative electrode may comprise a negative electrode current collector and a negative electrode mixture layer disposed on at least one surface of the negative electrode current collector.

### (Negative electrode current collector)

A non-limiting example of the negative electrode current collector may comprise a copper foil, a nickel foil, a stainless steel foil, a titanium foil, a nickel foam, a copper foam, a polymer substrate coated with a conductive metal, and optionally similar or related current collector materials. The negative electrode current collector is not limited, but may be, for example, 10 to 50 µm.

### (Negative electrode material)

The negative electrode mixture layer may comprise a negative electrode active material. As the negative electrode active material, a material capable of adsorbing or desorbing lithium ions may be used. For example, the negative electrode active material may be carbonaceous material such as crystalline carbon, amorphous carbon, carbon composite, and carbon fiber; lithium metal; lithium alloy; a silicon (Si)-containing material, a tin (Sn)-containing material, or the like.

An example of the amorphous carbon may comprise hard carbon, soft carbon, coke, mesocarbon microbead (MCMB), mesophase pitch-based carbon fiber (MPCF), and others.

An example of the crystalline carbon may comprise graphite-based carbon such as natural graphite, artificial graphite, graphitized coke, graphitized MCMB, and graphitized MPCF.

The lithium metal may comprise a pure lithium metal or a lithium metal on which a protective layer is formed for suppressing dendrite growth. In an example embodiment, a lithium metal-containing layer which is deposited or coated on a negative electrode current collector may be used as a negative electrode active material. In an example embodiment, a lithium thin film layer may be used as a negative electrode active material layer.

An element comprised in the lithium alloy may comprise aluminum, zinc, bismuth, cadmium, antimony, silicon, lead, tin, gallium, indium, or the like.

The silicon-containing material may provide a more increased capacity characteristic. The silicon-containing material may comprise Si, SiOₓ (0<x<2), metal-doped SiOₓ (0<x<2), a silicon-carbon composite, and optionally similar or related Si-containing materials. The metal may comprise lithium and/or magnesium, and the metal-doped SiOₓ (0<x<2) may comprise metal silicate.

### (Method for manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, but is not limited thereto. The negative electrode mixture layer may further comprise a binder, and may optionally further comprise a conductive material, a thickener, and possibly further components.

In some example embodiments, the negative electrode may comprise a negative electrode active material layer in a lithium metal form formed by a deposition/coating process.

### (Negative electrode solvent)

A non-limiting example of the solvent for a negative electrode mixture may comprise water, pure water, deionized water, distilled water, ethanol, isopropanol, methanol, acetone, n-propanol, t-butanol, and optionally similar or related solvents.

### (Negative electrode binder/ conductive material/ thickener)

As the binder, the conductive material, and the thickener, the materials described above which may be used in the manufacture of a positive electrode may be used.

In some example embodiments, a styrene-butadiene rubber (SBR)-based binder, carboxymethyl cellulose (CMC), a polyacrylic acid-based binder, a poly(3,4-ethylenedioxythiophene) (PEDOT)-based binder, and optionally similar or related polymer binder materials may be used as a negative electrode binder.

### [Electrode assembly]

According to example embodiments, the positive electrode, the negative electrode, and the separator may be repeatedly disposed to form an electrode assembly. In some example embodiments, the electrode assembly may be a winding type, a stacking type, a zigzag (z)-folding type, or a stack-folding type.

### [Electrolyte]

A lithium secondary battery may be defined by housing the electrode assembly in a case with an electrolyte. According to example embodiments, a nonaqueous electrolyte solution may be used as the electrolyte.

### (Lithium salt/ organic solvent)

A nonaqueous electrolyte solution comprises a lithium salt as an electrolyte and an organic solvent, the lithium salt is represented by, for example, Li⁺X⁻, and an example of an anion (X⁻) of the lithium salt may comprise F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and optionally similar or related anions.

The organic solvent has sufficient solubility of the lithium salt or the additive, and may comprise an organic compound having no reactivity in a battery. The organic solvent may comprise, for example, at least one of carbonate-based solvents, ester-based solvents, ether-based solvents, ketone-based solvents, alcohol-based solvents, and aprotic solvents. An example of the organic solvent may comprise propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethylsulfoxide, acetonitrile, dimethoxyethane, sulfolane, gamma-butyrolactone, propylene sulfite, and optionally similar or related solvents. These may be used alone or in combination of two more.

### (Additive)

The nonaqueous electrolyte solution may further comprise an additive. The additive may comprise, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds. The cyclic carbonate-based compound may be vinylene carbonate (VC), vinylethylene carbonate (VEC), or optionally similar or related additive compounds. The fluorine-substituted cyclic carbonate-based compound may comprise, for example, fluoroethylene carbonate (FEC) and optionally similar or related compounds. The sultone-based compound may comprise, for example, 1,3-propane sultone, 1,3-propene sultone, 1,4-butane sultone, and optionally similar or related compounds. The cyclic sulfate-based compound may comprise, for example, 1,2-ethylene sulfate, 1,2-propylene sulfate, and optionally similar or related compounds. The cyclic sulfite-based compound may comprise, for example, ethylene sulfite, butylene sulfite, and optionally similar or related compounds. The phosphate-based compound may comprise, for example, lithium difluoro bis-oxalato phosphate, lithium difluoro phosphate, and optionally similar or related compounds. The borate-based compound may comprise, for example, lithium bis(oxalate) borate and optionally similar or related compounds.

Hereinafter, the examples and the experimental examples will be illustrated specifically in detail in the following. However, since the examples and the experimental examples described later only illustrate a part of one example embodiment, the technology described in the present specification should not be construed as being limited thereto.

### <Experimental method>

### 1. Measurement of surface roughness (Ra)

A manufactured separator was cut into a square shape with one side of 1 cm, which was then fixed on a slide glass substrate using double-sided tape, and roughness was measured using Atomic Force Microscopy (Bruker, Icon). At this time, a measurement mode was a tapping mode, TESPA-V2 was used as a tip, and a scan speed of 1.0 Hz and a resolution of 256 were set.

### 2. Measurement of coating density

A coating density was calculated by dividing a weight per unit area (g/m²) of the inorganic particle layer formed on the porous substrate by the thickness (µm) of the inorganic particle layer (unit: g/(m²·µm)).

### 3. Measurement of air permeability

Air permeability (Gurley permeability) was measured in accordance with ASTM D726 using Densometer (Toyoseiki Ltd.), and a time it took for 100 cc of air to pass an area of 1 in2 of the separator was recorded as a second unit.

### 4. Measurement of heat shrinkage rate

A manufactured separator was cut into a square shape with one side of 10 cm, and a machine direction (MD) and a transverse direction (TD) were marked. A sample was placed in the center, 5 sheets of paper were placed on and under the sample, respectively, and the four sides of the paper were wrapped with tape. The sample wrapped with paper was allowed to stand in a hot air oven at a temperature of 150°C for 60 minutes. Thereafter, the sample was taken out, the separator was measured with a camera, and the shrinkage rate in the machine direction (MD) of the following Mathematical Formula 1 and the shrinkage rate in the transverse direction (TD) of the following Mathematical Formula 2 were calculated: Shrinkage rate in MD (%) = (length in MD before heating - length in MD after heating) × 100 / length in MD before heating Shrinkage rate in TD (%) = (length in TD before heating - length in TD after heating) × 100 / length in TD before heating

### 5. Measurement of moisture content

For measuring the moisture content, first, the separator was dried. The drying was performed in a dry room having a dew point of -40°C, and the separator was dried in a convection oven at 80°C for 12 hours. Thereafter, the separator was taken out of the oven and stored in the dry room for 30 minutes. Next, 0.3 g of the dried separator was collected and a moisture amount occurring by heating a specimen to 150°C was measured in accordance with a Karl Fischer moisture measurement method using a moisture meter (Metrohm, 917 Coulometer).

### 6. Measurement of performance initially and after 100 cycles of operation

Evaluation of the resistance (DC-IR) of the secondary battery used a J-pulse (Japan Electric Vehicle Association Standards, JEVS D 713) method which evaluates 10 second discharge and charge characteristics with 0.25 C, 0.5 C, 1.0 C, 1.5 C, 2.0 C, and 2.5 C. The average impedance of three batteries was calculated by the above method to calculate an initial resistance value.

In the case of DC-IR and the capacity after 100 cycles, 100 cycles of charge and discharge were performed from 2.7 V (constant current) to 4.3 V (constant current constant voltage) with charge/discharge with 0.1 C at the first cycle, 0.2 at the second cycle, and 0.5 C after the third cycles, and then DC-IR was measured after 100 cycles by a J-pulse method as in the initial resistance and the capacity at this time was measured.

### 7. Measurement of surface roughness after 600 cycles of operation

After operating 600 cycles in the same manner as in 6., the battery was discharged 3 times until the voltage reached 2.7 V, and then the pouch was disassembled. Thereafter, the battery was washed with dimethyl carbonate and then allowed to stand in an oven at 80°C for a week to sufficiently dry it. Then, the surface roughness was measured in the same manner as in 1.

### 8. Measurement of thickness

Thickness of separator: the separators were overlapped in 10 layers, each thickness was measured at 5 random points in the transverse direction with a thickness meter available from Mitutoyo, an average thickness of the 10 layer separator was derived, and the value was divided by 10 again to derive an overall average thickness of a single separator.

Thickness of porous film: the average thickness of the porous film was derived by overlapping only the porous film in 10 layers, measuring the thicknesses at 5 random points in the transverse direction with a thickness meter available from Mitutoyo, deriving the average thickness of the 10 layer porous film, and dividing it by 10 again.

Thickness of inorganic particle layer: it was derived as a value calculated by subtracting an average thickness of the single porous film from the entire average thickness of the single separator determined by the method described above.

### 9. Measurement of weight average molecular weight

Measurement of weight average molecular weight was performed by using GPC (EcoSEC HLC-8320 GPC Reflective Index detector from Tosoh Corporation) using TSKgel guard PWx, two columns of TSKgel GMPWxl and TSKgel G2500PWxl (7.8×300 mm) as a GPC column, a 0.1 M aqueous NaNO₃ solution as a developing solvent, and polyethylene glycol as a standard, and performing analysis at 40°C at a flow rate of 1 mL/min.

### 10. Measurement of D₅₀ value

Particle diameter(D₅₀) was measured in accordance with the ISO standard(ISO13320-1) using a particle size analyzer (Microtrac, Microtrac S3500) .

### <Example 1>

### Manufacture of separator

Boehmites (γ-AlOOH) having each average particle diameter of 300 nm and 700 nm (that is, a mixture of two types of boehmite, wherein these two types of boehmite differ by having different average particle diameters (D50) of 300 nm and of 700 nm) were added to water at a weight ratio of 3:7, BYK-2018 (BYK GmbH) as a dispersant was added at 0.7 parts by weight with respect to 100 parts by weight of the boehmite, and stirring was performed for 30 minutes to prepare a water dispersion having a solid content of 45 wt%. Thereafter, the water dispersion was further stirred for 3 minutes at a rotation speed of 250 rpm using a planetary mixer (beads size: 0.65 nm). Subsequently, 3 parts by weight of polyacrylamide (Mw: 150,000 g/mol, Sigma Aldrich Inc.) with respect to 100 parts by weight of the boehmite was added, and water was further added to prepare a water-based slurry having a final solid content of 32 wt%.

The water-based slurry was applied on both surfaces of a porous polyolefin film having a thickness of 9 um (ENPASS, SK Innovation, average pore size: 40 nm) at a speed of 10 m/min to form inorganic particle layers having each thickness of about 1.5 um. For leveling of the inorganic particle layer, the applied film was passed through a smoothing bar having no pattern, and then placed into a hot air dryer at 45°C to manufacture a separator.

### Manufacture of battery

Manufacture of positive electrode: 92 wt% of a lithium cobalt composite oxide (LiCoO₂) as a positive electrode active material, 4 wt% of carbon black as a conductive material, and 4 wt% of polyvinylidene fluoride (PVdF) as a binder were added to N-methyl-2-pyrrolidone (NMP) as a solvent to prepare a positive electrode mixture slurry. The prepared slurry was applied on an aluminum (Al) thin film having a thickness of 30 µm, dried at a temperature of 120°C, and roll-pressed to manufacture a positive electrode having a thickness of 140 µm.

Manufacture of negative electrode: 96 wt% of graphite carbon, 3 wt% of PVdF as a binder, and 1 wt% of carbon black as a conductive material were added to NMP as a solvent to prepare a negative electrode mixture slurry. The prepared slurry was applied on a copper (Cu) thin film having a thickness of 20 µm, dried at 120°C, and roll-pressed to manufacture a negative electrode having a thickness of 150 um.

A pouch type battery was assembled by stacking the manufactured separator between the positive electrode and the negative electrode, and an electrolyte solution which was ethylene carbonate (EC)/ ethyl methyl carbonate (EMC)/ dimethyl carbonate(DMC) = 3:5:2 (volume ratio) in which 1M lithium hexafluorophosphate (LiPF6) was dissolved was injected into each assembled battery to manufacture a lithium secondary battery. Thus, a pouch type lithium ion secondary battery having a capacity of 80 mAh was manufactured.

### <Example 2>

A battery was manufactured in the same manner as in Example 1, except that in the manufacture of the separator, boehmites having average particle diameters (D₅₀) of 300 nm and 1600 nm were used at a weight ratio of 1:1 as the boehmite and the rotation speed of 150 rpm was applied.

### <Example 3>

A battery was manufactured in the same manner as in Example 1, except that in the manufacture of the separator, a final solid content of the water-based slurry was adjusted to 22 wt%.

### <Example 4>

A battery was manufactured in the same manner as in Example 2, except that in the manufacture of the separator, a final solid content of the water-based slurry was adjusted to 39 wt%.

### <Example 5>

A battery was manufactured in the same manner as in Example 1, except that in the manufacture of the separator of Example 1, the rotation speed was applied at 200 rpm and the drying temperature of the hot air dryer was adjusted to 40°C.

### <Comparative Example 1>

A battery was manufactured in the same manner as in Example 1, except that in the manufacture of the separator, the final solid content of the water-based slurry was adjusted to 39 wt%, the speed of slurry application was 20 m/min, and the smoothing bar was not applied.

### <Comparative Example 2>

A battery was manufactured in the same manner as in Example 2, except that in the manufacture of the separator, the final solid content of the water-based slurry was adjusted to 39 wt%, the speed of slurry application was 20 m/min, and the smoothing bar was not applied.

### <Comparative Example 3>

A battery was manufactured in the same manner as in Example 1, except that in the manufacture of the separator, the rotation speed of 300 rpm was applied, the final solid content of the water-based slurry was adjusted to 22 wt%, the speed of slurry application was 5 m/min, and a hot air dryer at 35°C was applied as the drier.

### <Comparative Example 4>

A battery was manufactured in the same manner as in Example 2, except that in the manufacture of the separator, the rotation speed of 300 rpm was applied, the final solid content of the water-based slurry was adjusted to 22 wt%, the speed of slurry application was 5 m/min, and a hot air dryer at 35°C was applied as the drier.

### <Comparative Example 5>

A battery was manufactured in the same manner as in Example 1, except that in the manufacture of the separator, the rotation speed of 350 rpm was applied, the final solid content of the water-based slurry was adjusted to 39 wt%, the speed of slurry application was 5 m/min, and a hot air dryer at 35°C was applied as the drier.

### <Comparative Example 6>

A battery was manufactured in the same manner as in Example 2, except that in the manufacture of the separator, the final solid content of the water-based slurry was adjusted to 39 wt%, the speed of slurry application was 20 m/min, and a hot air dryer at 45°C was applied as the drier.

The surface roughness and the physical properties of the separators manufactured in the above examples and comparative examples were measured and are shown in the following Table 1:

**[Table 1]**

| | Surface roughness (nm) | Coating density (g/ (m² · µm)) | Air permeability (s/100 cc) | Heat shrinkage rate (%), 150°C/ 1 hr | | Moisture content (ppm) |
|---|---|---|---|---|---|---|
| | | | | MD | TD | |
| Example 1 | 134 | 1.34 | 165 | 1.5 | 1.5 | 654 |
| Example 2 | 138 | 1.15 | 170 | 3.0 | 2.5 | 599 |
| Example 3 | 103 | 1.36 | 169 | 1.5 | 1.5 | 680 |
| Example 4 | 157 | 1.10 | 165 | 3.5 | 3.5 | 595 |
| Example 5 | 122 | 1.20 | 169 | 2.5 | 2.5 | 711 |
| Comparative Example 1 | 271 | 1.22 | 159 | 7.5 | 8.5 | 544 |
| Comparative Example 2 | 282 | 1.04 | 162 | 6.5 | 7.0 | 520 |
| Comparative Example 3 | 75 | 1.49 | 187 | 1.0 | 1.0 | 987 |
| Comparative Example 4 | 68 | 1.35 | 177 | 2.0 | 2.0 | 899 |
| Comparative Example 5 | 97 | 1.41 | 172 | 1.0 | 1.0 | 1004 |
| Comparative Example 6 | 164 | 1.09 | 168 | 3.5 | 3.5 | 550 |

The performances of the batteries manufactured in the above examples and comparative examples were evaluated and are shown in the following Tables 2 and 3:

**[Table 2]**

| | Initial | | After 100 cycles | | | |
|---|---|---|---|---|---|---|
| | DCIR (mΩ) | Capacity (mAh) | DCIR | | Capacity | |
| | | | mΩ | % | mAh | % |
| Example 1 | 987 | 80 | 1051 | 6.5 | 75 | -6.3 |
| Example 2 | 968 | 80 | 1049 | 8.4 | 75 | -6.3 |
| Example 3 | 995 | 80 | 1118 | 12.4 | 74 | -7.5 |
| Example 4 | 958 | 80 | 1023 | 6.8 | 75 | -6.3 |
| Example 5 | 985 | 80 | 1129 | 14.6 | 73 | -8.8 |
| Comparative Example 1 | 957 | 80 | 1092 | 14.1 | 72 | -10.0 |
| Comparative Example 2 | 948 | 80 | 1097 | 15.7 | 71 | -11.3 |
| Comparative Example 3 | 1021 | 80 | 1198 | 17.3 | 69 | -13.8 |
| Comparative Example 4 | 1013 | 80 | 1185 | 17.0 | 69 | -13.8 |
| Comparative Example 5 | 998 | 80 | 1179 | 18.1 | 68 | -15.0 |
| Comparative Example 6 | 954 | 80 | 1098 | 15.1 | 71 | -11.3 |

As confirmed from Table 2, the separators of the examples having the surface roughness of 100 nm to 160 nm showed increased battery resistance of 15% or less and a decreased capacity even after 100 cycles of operation, but the separators having the surface roughness value of higher than 160 nm (Comparative Examples 1, 2, and 6) or the separators having the surface roughness value of lower than 100 nm (Comparative Examples 3, 4, and 5) all had battery resistance increased by 14% or more and the capacity decreased by 10% or more.

Specifically, since the separators of Comparative Examples 1, 2, and 6 had relatively loose packing of inorganic particles due to the high surface roughness, the separators had low air permeability and moisture content and the batteries had low initial resistance, but lithium ions did not uniformly migrate during charging/discharging, battery performance was degraded. Since the separators of Comparative Examples 3, 4, and 5 had relatively dense packing of inorganic particles due to low surface roughness, the separator had high air permeability and moisture content and the batteries had high initial resistance, and battery performance was degraded due to a side reaction by moisture during charging/discharging. However, it was confirmed that the separators of the examples satisfying the surface roughness in a range of 100 nm to 160 nm had excellent resistance, and also, the batteries manufactured using the separators implemented high output performance and discharge efficiency, while also improving battery life.

**[Table 3]**

| | Surface roughness (nm) | | |
|---|---|---|---|
| | Initial | After 600 cycles | change rate (%) |
| Example 1 | 134 | 151 | 12.69 |
| Example 2 | 138 | 152 | 10.14 |
| Example 3 | 103 | 115 | 11.65 |
| Example 4 | 157 | 155 | -1.27 |
| Example 5 | 122 | 134 | 9.84 |
| Comparative Example 1 | 271 | 321 | 18.45 |
| Comparative Example 2 | 282 | 328 | 16.31 |
| Comparative Example 3 | 75 | 131 | 74.67 |
| Comparative Example 4 | 68 | 129 | 89.71 |
| Comparative Example 5 | 97 | 143 | 47.42 |
| Comparative Example 6 | 164 | 199 | 21.34 |

As confirmed from Table 3, the separators according to the examples had significantly lower change rates of the surface roughness even after 600 cycles of charge/discharge than the separators of the comparative examples, and it was found therefrom that the surface properties of the separators were maintained even after long-term battery operation and the life characteristics were excellent.

The present disclosure relates to a separator comprising: a porous substrate, and an inorganic particle layer comprising inorganic particles on at least one surface of the porous substrate, wherein the inorganic particle layer has a surface roughness (Ra) of 100 nm to 160 nm. The separator according to an example embodiment may improve heat resistance, charge/discharge characteristics, and life characteristics of a battery, by having the above surface roughness.

Hereinabove, though an example embodiment has been described in detail by the examples and the experimental examples, the scope of an example embodiment is not limited to specific examples, and should be construed by the appended claims.

## Claims

1. A separator for an electrochemical device, comprising:
a porous substrate; and
an inorganic particle layer comprising inorganic particles on or above at least one surface of the porous substrate,
wherein the inorganic particle layer has a surface roughness (Ra) of 100 nm to 160 nm.

2. The separator of claim 1, wherein the inorganic particles comprise one or more selected from the group consisting of boehmite, CeO₂, MgO, CaO, ZnO, Al₂O₃, TiO₂, BaTiO₃, HfO₂, SrTiO₃, SnO₂, NiO, ZrO₂, Y₂O₃, and SiC.

3. The separator of claim 1 or 2, wherein the inorganic particle layer further comprises a binder, preferably wherein the binder comprises any one or more selected from the group consisting of ester-based polymers, amide-based polymers, imide-based polymers, acryl-based polymers, acrylamide-based polymers, vinylalcohol-based polymers, fluorine-based polymers, and vinylpyrrolidone-based polymers, optionally wherein the binder has a weight average molecular weight of 10,000 g/mol to 2,000,000 g/mol

4. The separator of claim 3, wherein the binder is comprised at 0.1 parts by weight to 20.0 parts by weight with respect to 100 parts by weight of the inorganic particles.

5. The separator of any one of claims 1 to 4, wherein the inorganic particles comprise a mixture of one or more types of inorganic particles, wherein the one or more types of inorganic particles differ by having average particle diameters (D₅₀) different from each other.

6. The separator of any one of claims 1 to 5, wherein the inorganic particles have an average particle diameter (D₅₀) of 0.05 µm to 2.0 µm.

7. The separator of any one of claims 1 to 6, wherein the inorganic particle layer has a thickness of 0.1 um to 10.0 um.

8. The separator of any one of claims 1 to 7, wherein the inorganic particle layer has a coating density of 0.8 g/(m²·µm) or more.

9. The separator of any one of claims 1 to 8, wherein the separator has shrinkage rates in the machine direction (MD) and in the transverse direction (TD) after being allowed to stand at 150°C for 60 minutes of 5.0% or less.

10. The separator of any one of claims 1 to 9, wherein the separator has a moisture content of 300 ppm to 1000 ppm, the moisture content being measured by heating the separator to 150°C after drying the separator at 80°C for 12 hours in a dry room having a dew point of -40°C or lower and then leaving the separator in the dry room for 30 minutes, and then measuring the moisture in accordance with a Karl Fischer moisture measurement method.

11. The separator of any one of claims 1 to 10, wherein the separator had a change rate of the surface roughness (Ra) of 30% or less, when a secondary battery manufactured using the separator is charged and discharged for 600 cycles.

12. A method for producing a separator, comprising the steps of:
providing a porous substrate,
applying a slurry comprising inorganic particles to one or both of the surface (s) of the porous substrate in order to provide inorganic particle layer(s) on one or both sides of the porous substrate, respectively;
wherein the obtained inorganic particle layer has a surface roughness (Ra) of 100 nm to 160 nm,
optionally wherein said surface roughness (Ra) is relatively maintained by change rate of the surface roughness (Ra) being 30% or less, when a secondary battery manufactured using the separator is charged and discharged for 600 cycles.

13. The method for producing a separator according to claim 12 for manufacturing a secondary battery, wherein the manufacturing conditions for obtaining the inorganic particle layer with the specified surface roughness (Ra) are selected from one or more of the following conditions, respectively alone or in combination:
content and type of a binder;
use or type of a dispersant and/or of a lubricant used for the slurry;
solid content of the slurry;
the rotation speed and/or bead size in a slurry preparation step;
coating rate when applying the slurry on the porous substrate;
use or absence of a smoothing bar;
use or absence of a drying under heating and which drying temperature is used;
type of the porous substrate;
type of the electrolyte of a battery is; and/or
type of inorganic materials comprised in the inorganic particle layer, selected from average particle diameter and/or distribution of particle size, and/or weight ratio of different types of inorganic particles;
preferably wherein the manufacturing conditions include selecting the type of inorganic particles comprised in the inorganic particle layer, wherein the average particle diameter (D50) falls within a predetermined range, or wherein the inorganic particles comprise a mixture of one or more types of inorganic particles which differ by having average particle diameters (D50) different from each other.

14. A secondary battery comprising the separator according to any one of claims 1 to 11.

15. The secondary battery of claim 14, wherein the secondary battery has a capacity change rate after 100 cycles of charge and discharge of 20% or less.
